# EUROPEAN PATENT APPLICATION

(11) **EP 3 644 247 A1**
(43) Date of publication of application: **29.04.2020**
(21) Application number: 19202958.5
(22) Date of filing: 14.10.2019
(51) Int. Cl.: G06Q 10/06, G06Q 50/30

(54) **METHOD FOR HANDLING THE SERVICING OF VEHICLE FLEETS**

(30) Priority: 26.10.2018 US 201816171415
(71) Applicant: The Goodyear Tire & Rubber Company, Akron, OH 44316 (US)
(72) Inventor: WOFFORD-REDMOND, Jamie Lynn, Akron, OH Ohio 44305 (US); McINTOSH, Johnny Lee, Uniontown, OH Ohio 44685 (US); ROOT, Michele Lee, Medina, OH Ohio 44256 (US); WRIGHT, Joshua Kenneth, Macedonia, OH Ohio 44056 (US); MARR, Cary Duane, Van Buren, AR Arkansas 72956 (US)
(74) Representative: Kutsch, Bernd

(57) **Abstract**

A method for managing the servicing of vehicles (12) in a fleet is disclosed. The method includes the steps of: using a mobile device (16) associated with a vehicle (12) to be serviced to contact a fleet communication center (18) by wireless transmission; receiving the contact in the fleet communication center (18); opening a service request using a fleet communication center computer (26); identifying a local servicer preferably in close proximity to a geographic location of the vehicle (12) to be serviced; sending information in the service request from the fleet communication center (18) to a data device (16) of a service technician of the identified local servicer; upon completion of servicing of the vehicle (12) by the service technician, sending by wireless transmission a notification of completion of the service request to a service administration (32); validating the notification of completion to generate a completed service request; sending information in the completed service request by wireless transmission from the service administration (32) to an approver step of a fleet operations unit (20); approving the completed service request at the fleet operations unit (20) and generating a purchase order based on the completed service request; and wirelessly transmitting the purchase order from the fleet operations unit (20) to the service administration (32).

## Description

### Field of the Invention

The invention relates to the servicing of vehicles that are in fleets. More particularly, the invention is directed to a system and method of managing roadside servicing of vehicles in a fleet that includes direct electronic communications between the parties involved in requesting, executing, verifying and approving roadside service requests to improve the speed and accuracy in the processing of such service requests.

### Background of the Invention

Fleets of vehicles are in widespread use. Such fleets include commercial vehicles, such as tractor-trailers, heavy-duty trucks, dump trucks and the like, as well as lighter-duty trucks and automobiles. For the purpose of convenience, reference herein shall be made to the term vehicle with the understanding that such reference applies to commercial trucks, lighter-duty trucks and automobiles. A primary consideration for a fleet of vehicles is optimizing the amount of time that each vehicle is operating in over-the-road travel. To this end, when an event occurs that requires servicing of the vehicle, which is referred to as a service event, it is desirable to repair the vehicle and return it to an operating condition.

Service events for vehicles that are in a fleet typically include roadside service events, such as a flat tire which needs to be repaired and/or replaced, as well as other vehicle issues. Of course, service events may occur in other locations, such as in a lot or even a fleet facility. Because such service events prevent the vehicle from operating, it is important to repair the vehicle as soon as possible. In addition, most service events occur when the vehicle is operating in any given location over a wide geographic region. In order to repair the vehicle, a local servicer often needs to be contacted.

Contact of the local servicer may be made by the vehicle operator contacting fleet operations, which in turn contacts an authorized local servicer. Alternatively, the vehicle operator may contact the authorized local servicer directly. Once the local servicer has been contacted, a service technician is dispatched to locate the vehicle and perform the repair. For example, in the case of a vehicle with a flat tire, the technician provides a new tire and replaces the flat tire with the new tire.

After the vehicle has been serviced, the local servicer has to be paid by the fleet operations. Because the vehicle is in a fleet, payment typically is made from the fleet operations to the local servicer, rather than from the vehicle operator to the service technician. In the prior art, the service technician and/or the local servicer created a paper ticket describing the repair and the vehicle that was repaired. The paper ticket was then faxed or emailed to the fleet operations center, where personnel in the fleet operations center processed the ticket. Processing of tickets in the prior art was a lengthy process, typically consuming weeks for approval and payment. Only after processing and approval of the ticket would payment be sent to the local servicer. Due to the length of time for processing and approval, payment to local servicers was significantly delayed, placing a hardship on local servicers and creating potential record keeping issues for the local servicers and the fleet operations.

In addition, the paper tickets sometimes contain inaccuracies that have to be worked out or corrected between the fleet operations center and the local servicer in repeated back-and-forth faxing or emailing, thereby creating further delays. Since fleets may have hundreds or thousands of vehicles, there may be thousands of road service events in a year. The cumbersome prior art method thus consumes an undesirable amount of time and resources for the fleet operations, as well as creating further undesirable delays of payment to the local servicer.

As a result, there is a need in the art for a system and method of managing roadside servicing of vehicles in a fleet that improves the speed and accuracy of the processing of service requests.

### Summary of the Invention

The invention relates to a method in accordance with claim 1.

Dependent claims refer to preferred embodiments of the invention.

According to an of an exemplary embodiment of the invention, a method for managing the servicing of vehicles in a fleet includes the step of using a mobile device associated with a vehicle to be serviced to contact a fleet communication center by wireless transmission. The contact is received in the fleet communication center, and a service request is opened using a fleet communication center computer. A local servicer in close proximity to a geographic location of the vehicle to be serviced is identified, and information in the service request is sent from the fleet communication center to a data device of a service technician of the identified local servicer. Upon completion of servicing of the vehicle by the service technician, a notification of completion of the service request is sent by wireless transmission to a service administration. The notification of completion is validated to generate a completed service request, and information in the completed service request is sent by wireless transmission from the service administration to an approver of a fleet operations unit. The completed service request is approved at the fleet operations unit and a purchase order is generated based on the completed service request. The purchase order is wirelessly transmitted from the fleet operations unit to the service administration.

### Brief Description of the Drawings

The invention will be described by way of example and with reference to the accompanying drawings, in which:
Figure 1 is a block diagram of exemplary components associated with the system and the method for managing the servicing of vehicles in a fleet of the present invention;
Figure 2 is a flow diagram illustrating steps of an exemplary embodiment of the method for managing the servicing of vehicles in a fleet of the present invention; and
Figure 3 is a diagram illustrating further aspects of the method shown in Figure 2.

Similar numerals refer to similar parts throughout the drawings.

### Detailed Description of Example Embodiments of the Invention

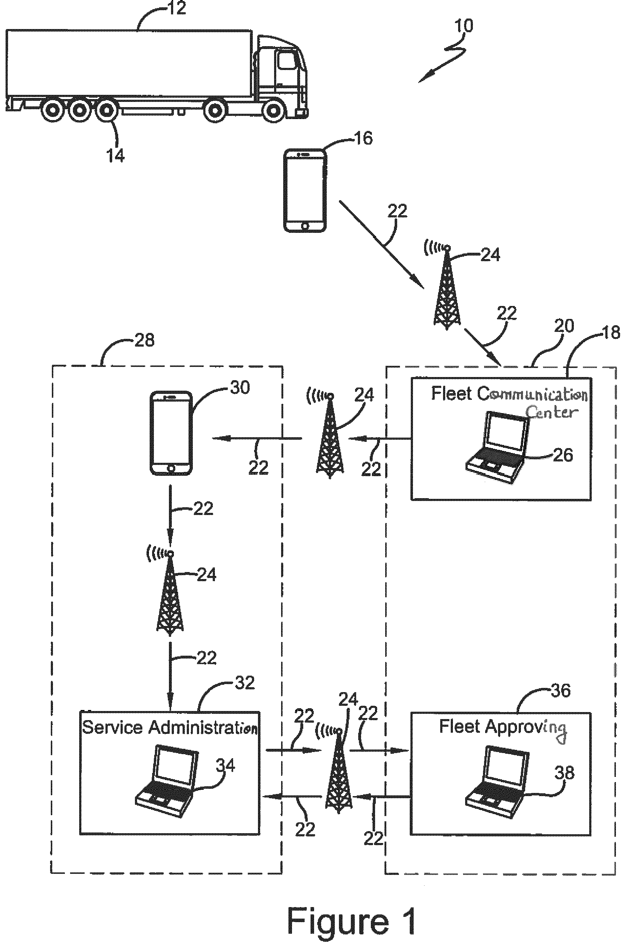

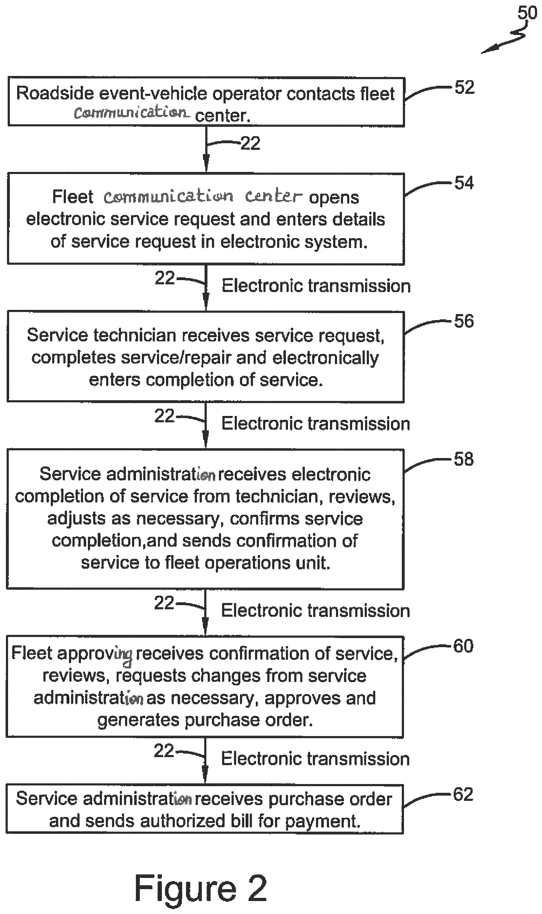

With reference to Figures 1 and 2, an exemplary system 10 for managing roadside servicing of vehicles in a fleet is shown in Figure 1, and a corresponding exemplary method 50 for managing roadside servicing of vehicles in a fleet is indicated in Figure 2.

A vehicle 12 experiences a service event, such as a tire 14 that has gone flat. In step 52, an operator of the vehicle 12 uses a mobile device 16 such as a mobile phone to contact a fleet communication center 18 in a fleet operations unit 20.

The mobile device 16 may be a smartphone that includes a processor, memory and an antenna for wireless data transmission, and thus is capable of receiving, storing and transmitting data. In such a case, the mobile device 16 may include a program, such as a computer application or app, which is configured to send a message to the fleet communication center 18 when directed to do so by the vehicle operator. Alternatively, the mobile device 16 may be a telephone that is used to place a wireless phone call to the fleet communication center 18.

When the vehicle operator initiates a service request with the mobile device 16, the message and/or phone call is sent by wireless transmission 22 through an antenna 24 to the fleet communication center 18. At step 54, a fleet representative (which may be a computer system) in the fleet communication center 18 opens an electronic service request, which is also referred to as an electronic ticket, using a computer 26. The computer 26 includes a processor, memory and means for transmitting data over the internet, such as a wired or wireless network router. The computer 26 thus may be equipped with a program that identifies a local servicer 28 that is in close proximity to the geographic location of the vehicle 12 to be serviced.

Using the computer 26, the fleet representative in the fleet communication center 18 triggers the sending of information from the electronic service request to a data device 30 of a service technician of the identified local servicer. The data device 30 of the service technician preferably is a mobile device, such as a smartphone, which includes a processor, memory and an antenna for wireless data transmission, and thus is capable of receiving, storing and transmitting data. The data device 30 preferably includes a program, such as a computer application or app, which is configured to receive the information sent from the representative in the fleet communication center 18, and to transmit information to a service administration 32, as will be described below.

The information that is sent from the fleet communication center 18 and received by the service technician's mobile device 30, step 56, preferably includes the geographic location of the vehicle 12 and the issue being experienced by the vehicle, such as a flat tire 14. The information may further include the type of vehicle 12 and details such as the tire size and type, as well as any other helpful vehicle characteristics. The information is sent by wireless transmission 22 through an antenna 24 from the fleet communication center 18 to the service technician's mobile device 30. In addition, if desired based upon particular considerations, a copy of the electronic service request may be electronically transmitted from the fleet communication center 18 to the service administration 32.

Further in step 56, the service technician goes to the vehicle 12 and completes the service or repair. Upon the completion of service, the technician may immediately acknowledge or enter completion of the service or repair on the mobile device 30. Once the completion of service or repair is entered into the mobile device 30 by the service technician, notification of the electronic service request and its completion are sent from the mobile device by wireless transmission 22 through an antenna 24 to the service administration 32 of the local servicer 28, step 58.

In step 58, a representative of the service administration 32 (which may be a computer system) receives an electronic notice of completion of the service request and the service request information on a computer 34. The computer 34 includes a processor, memory and means for transmitting data over the internet, such as a wired or wireless network router. The computer 34 thus receives and stores the service request information from the service technician's data device 30. Optionally, the computer 34 may receive and store the service request information from the fleet communication center 18 when a copy of the electronic service request is electronically transmitted from the fleet communication center to the service administration 32.

Upon receipt of the notice of completion of the service request, the representative of the service administration 32 may then examine/review the service request, validate the work performed and make any adjustments. For example, the initial contact from the vehicle operator may have concerned only one item, such as a flat tire 14. Upon reviewing the vehicle 12, the service technician may have discovered and addressed other issues. The system 10 and method 50 of the present invention enable the representative of the service administration 32 to verify and adjust information in the service request as necessary before being sent to the fleet operations unit 20 for approval.

Once the service request meets with the approval of the representative of the service administration 32, the representative confirms completion of the service request. Upon such confirmation, electronic notice of the completed service request is sent from the service administration 32 to an approver 36 of the fleet operations unit 20. More particularly, notice and information in the completed service request is sent from the computer 34 of the representative of the service administration 32 by wireless transmission 22 through an antenna 24 to a network and/or a computer 38 of the approver 36 of the fleet operations unit 20.

The fleet approving's computer 38 includes a processor, memory and means for transmitting data over the internet, such as a wired or wireless network router. The computer 38 thus receives and stores the completed service request information from the service administration 32. In step 60, the fleet approving 36 of the fleet operations unit 20 receives and reviews the completed service request. If the fleet approving 36 accepts the completed service request, the approval is entered into the computer 38 to accept the completed service request and generate a purchase order, which is sent by wireless transmission 22 through an antenna 24 to the local service administration 32.

The local service administration 28 receives the completed, approved service request and/or the purchase order from the fleet approving 36, step 62. The local service administration 28 may then create and send an authorized final bill for payment. Because the fleet operations unit 20 has already approved the completed service request, prompt payment can be made.

If the approver 36 does not accept the completed service request in step 60, he or she may immediately respond by wireless transmission 22 through an antenna 24 to the service administration 32 to request changes to the completed service request. Using the system 10 and method 50, the service administration 32 and the fleet approving 36 work out any changes, resulting in a completed service request that is acceptable to the approver. The approver 36 then approves the completed service request and generates a purchase order that is sent to the service administration 32. The local service administration 28 then creates and sends an authorized bill for payment by the fleet operations unit 20.

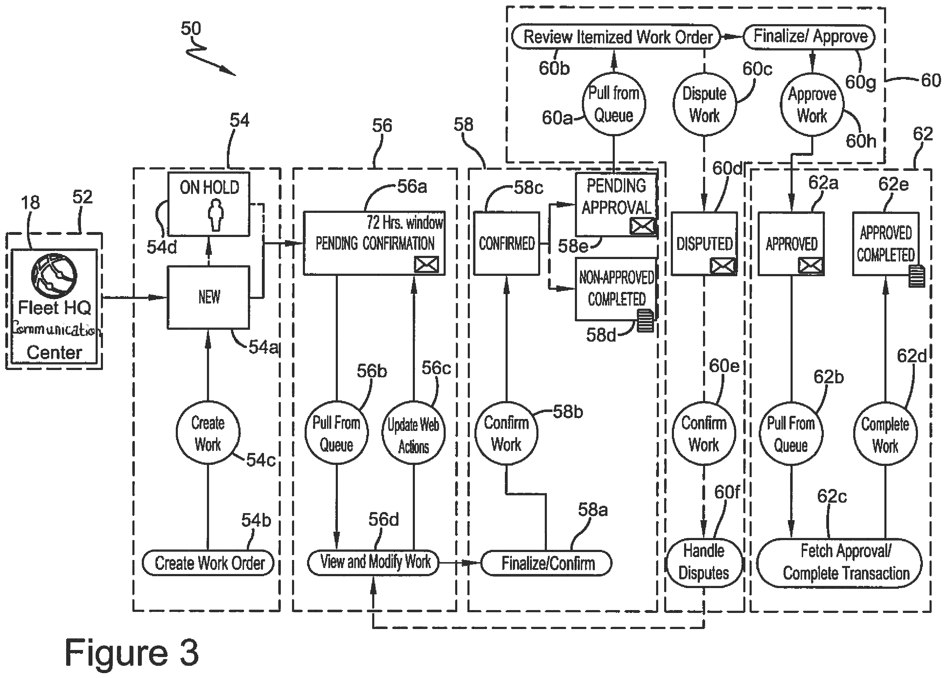

Turning now to Figure 3, further preferred details of the exemplary method of managing roadside servicing of vehicles in a fleet 50 are shown. For example, after the fleet communication center 18 is contacted by the vehicle operator in step 52, the fleet representative opens an electronic service request in step 54, which includes a new service request 54a. The new service request 54a may include input from a work order 54b and 54c originating from the local service administration 32 (Figure 1) in the event that the vehicle operator contacted the local servicer directly. The fleet representative preferably opens the new service request 54a in real time, which may result in the vehicle operator being placed on hold 54d while the electronic service request is opened.

In step 56, when the electronic service request is sent to the local service technician's mobile device 30 (Figure 1), the fleet operations unit 20 awaits pending confirmation 56a of completion of the servicing or repair. As the servicing or repair is being completed, the local service administration 32 may update and/or exchange information for the servicing or repair 56b, 56c and 56d with the fleet operations unit 20.

In step 58, once the servicing or repair is completed, the service administration 32 of the local servicer 28 finalizes a confirmation of the completion of service or repair 58a. The confirmation of service or repair 58b is sent to the fleet operations unit 20, and once received 58c, routes the completed electronic service request 58d and 58e to the fleet approving 36.

In step 60, the fleet approving 36 obtains the completed electronic service request 60a and reviews it 60b. If the approver 36 does not accept the completed electronic service request, he or she may immediately respond 60c and 60d to the local service administration 32 to request changes to the completed service request. The local service administration 32 obtains the request or disputed information 60e and works out final adjustments 60f with the fleet approving 36. Once the completed electronic service request is approved 60g by the fleet approving 36, the fleet approving electronically enters his or her approval 60h into the computer 38.

In step 62, the approved service request, and preferably a purchase order, are sent 62a from the fleet approving 36 to the local service administration 32, enabling the local service administration to obtain the approval 62b and generate a bill 62c. The bill, which has been authorized based upon the transmission from the fleet approving 36, is sent 62d to the fleet operations unit 20 for payment approval 62e.

In this manner, the invention provides a system 10 and method 50 for managing roadside servicing of vehicles 12 in a fleet that improves the speed and accuracy of handling and processing of service requests. The system and method may operate fully automated.

For example, the system 10 and method 50 enable direct, rapid communication between the parties who are necessarily involved in the servicing process. More particularly, by providing direct contact from the vehicle operator to the fleet communication center 18, from the communication center to the local service technician, from the service technician to his or her service administration 32, and from the service administration directly to the fleet approving 36, roadside repair can be executed, confirmed, checked for accuracy, adjusted as necessary, and approved by all parties in a rapid manner.

The workflow enabled by system 10 and method 50 for managing roadside servicing of vehicles in a fleet eliminates prior art paper service tickets, which were faxed back and forth between the local servicer 28 and the fleet operations unit 20 for approval. By eliminating prior art paper tickets, the system 10 and method 50 of the invention greatly improve the speed, accuracy and transparency of the road service process.

In addition, by providing for electronic review by the local service administration 32, as well as direct and rapid electronic communication between the local service administration and the fleet approving 36, the system 10 and method 50 allow any inaccurate or disputed items to be worked out quickly. The system 10 and method 50 of the present invention thus desirably reduce the amount of time consumed by the fleet operations unit 20 in reviewing roadside service requests, and desirably reduce delays in payment to the local servicer.

## Claims

1. A method for managing the servicing of vehicles (12) in a fleet, the method including the steps of:
using a mobile device (16) associated with a vehicle (12) to be serviced to contact a fleet communication center (18) by wireless transmission;
receiving the contact in the fleet communication center (18);
opening a service request using a fleet communication center computer (26);
identifying a local servicer preferably in close proximity to a geographic location of the vehicle (12) to be serviced;
sending information in the service request from the fleet communication center (18) to a data device (16) of a service technician of the identified local servicer;
upon completion of servicing of the vehicle (12) by the service technician, sending by wireless transmission a notification of completion of the service request to a service administration (32);
validating the notification of completion to generate a completed service request;
sending information in the completed service request by wireless transmission from the service administration (32) to an approver step of a fleet operations unit (20);
approving the completed service request at the fleet operations unit (20) and generating a purchase order based on the completed service request; and
wirelessly transmitting the purchase order from the fleet operations unit (20) to the service administration (32).

2. The method for managing the servicing of vehicles in a fleet of claim 1, further comprising, upon receipt of the purchase order by the service administration (32), the step of creating an authorized bill for payment by the fleet operations unit (20).

3. The method for managing the servicing of vehicles in a fleet of claim 1 or 2, wherein the step of using a mobile device to contact a fleet communication center is performed by an operator of the vehicle (12) in need of service.

4. The method for managing the servicing of vehicles in a fleet of at least one of the previous claims, wherein the contact includes at least one of a phone call and an electronic message.

5. The method for managing the servicing of vehicles in a fleet of at least one of the previous claims, wherein the information sent from the fleet communication center (18) to the data device of the service technician includes the geographic location of the vehicle (12) to be serviced and an issue being experienced by the vehicle (12) to be serviced.

6. The method for managing the servicing of vehicles in a fleet of at least one of the previous claims, further comprising electronically transmitting a copy of the service request from the fleet communication center (18) to the service administration (32).

7. The method for managing the servicing of vehicles in a fleet of at least one of the previous claims, wherein the step of validating the notification of completion to generate a completed service request includes adjusting the information in the service request.

8. The method for managing the servicing of vehicles in a fleet of at least one of the previous claims, wherein the step of approving the completed service request at the fleet operations unit (18) includes responding to the service administration (32) by wireless transmission to request changes to the completed service request.

9. The method for managing the servicing of vehicles in a fleet of at least one of the previous claims, wherein the step of approving the completed service request at the fleet operations unit (18) includes communications between the fleet approving (36) and the service administration (32) to revise the completed service request.

10. The method for managing the servicing of vehicles in a fleet of at least one of the previous claims, wherein the service request includes input from a work order from the service administration (32).

11. The method for managing the servicing of vehicles in a fleet of at least one of the previous claims, further comprising the step of updating service ticket information as servicing of the vehicle (12) is being executed.
